# EUROPEAN PATENT SPECIFICATION

(11) **EP 0 806 614 B1**
(45) Date of publication and mention of the grant of the patent: **25.09.2002**
(21) Application number: 97201363.5
(22) Date of filing: 06.05.1997
(51) Int. Cl.: F24D 3/14

(54) **A plate suitable for fixing a floor heating hose**
Platte zum Befestigen von Bodenheizungsröhren
Plaque pour fixer des tuyaux de chauffage par le sol

(30) Priority: 10.05.1996 NL 1003082
(43) Date of publication of application: 12.11.1997
(73) Proprietor: ISOBOUW SYSTEMS B.V., NL-5711 EG Someren (NL)
(72) Inventor: Bressers, Martin, 6657 BB Boven Leeuwen (NL)
(74) Representative: Veldman-Dijkers, Cornelia G.C., Ir.

(56) References cited:
- EP-A- 0 189 020
- EP-A- 0 582 031
- AT-A- 384 873
- DE-A- 2 840 148

## Description

The invention relates to a plate suitable for fixing a floor heating hose, which plate is at an upper side provided with a plurality of studs to clampingly receive a floor heating hose between adjacent studs.

By such plate, originally known from EP-A1-0.582.031. the upper side of the plate is provided with a plurality of studs. Said studs are hollow whereby the hollow spaces in the studs form chambers at the bottom side of said plate. The chambers are separated from each other by horizontal extending parts of said plate. On the upper side tubes are located on said horizontal extending parts. This means that between the tubes and the floor only said horizontal extending part is present to provide thermal and acoustic insulation. By such plate the insulation is relatively poor.

A plate of this kind is used for attaching floor heating hoses on a floor.

In a similar plate known from European Patent Application EP-A1-0 189 020 the bottom side facing away from the upper side is provided with a projection. The plate is supported with its projections on a base. A drawback of such a plate is that the spaces between the projections are completely in open communication with each other, which results in a relatively low thermal insulation and contact noise insulation of the plate.

This may be prevented by placing the plate on a so-called Trittschall plate. The two-plate assembly thus formed serves to position floor heating hoses, to thermally insulate the floor and to provide contact noise insulation. A drawback of such an assembly is the fact that it comprises two separate plates.

The object of the invention is to provide a plate which is suitable both for fixing a floor heating hose and for providing adequate thermal and acoustic insulation.

This objective is accomplished with a device according to the invention in that said plate comprises at its underside upstanding ribs facing away from the plate and forming a regular pattern of adjacent chambers.

The plate is supported on the floor by the ribs. The chambers, which are bounded by the plate, the ribs provided thereon and the floor, provide a relatively satisfactory thermal insulation and contact noise insulation. The studs and the chambers are preferably arranged in a regular pattern with respect to each other, so that the plate is uniformly loaded when the floor is being used.

One embodiment of the plate according to the invention is characterized in that a rib bounding said chambers is provided with a passage interconnecting the chambers arranged adjacently to each other, whereby the width of the passage is less than 30%, preferably less than 20%, of the length of a rib.

Because the passages between chambers arranged adjacently to each other are relatively narrow, a change in temperature or sound in one chamber is transmitted to a relatively limited number of surrounding chambers, whereby it has become apparent that this leads to a relatively good thermal and acoustic insulation.

The invention will now be explained in more detail with reference to a drawing, in which:
Figures 1A, 1B and 1C are a plan view, a cross-sectional view and a bottom view respectively of a first embodiment of a plate according to the invention;
Figures 2A, 2B, 2C until 16A, 16B, 16C are plan views, cross-sectional views and bottom views respectively of other embodiments of a plate according to the invention.

Like parts are numbered alike in the Figures.

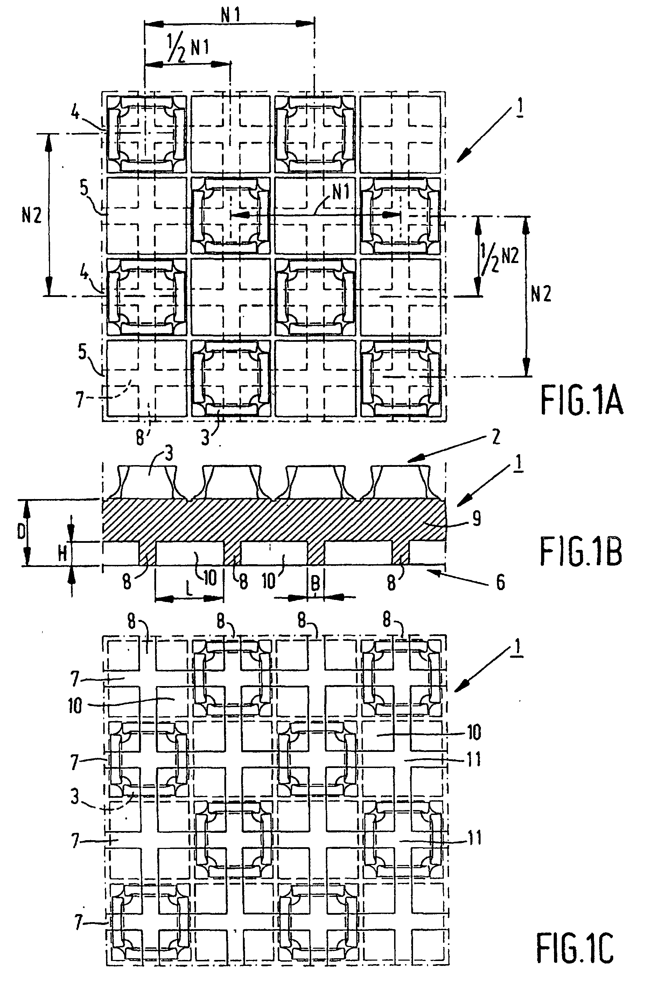

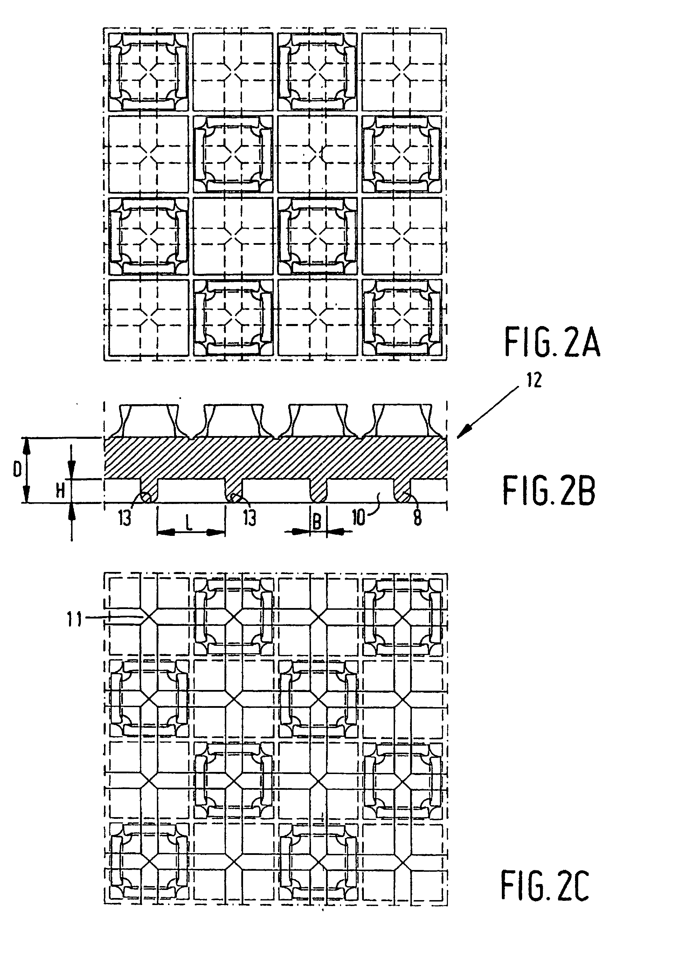

Now a first embodiment of a plate according to the invention will be explained in detail with reference to Figures 1A-1C. In the description of Figures 2A-2C until 16A-16C only the distinguishing features will be explained.

Figures 1A, 1B and 1C show a plan view, a cross-sectional view and a bottom view respectively of a part of a first embodiment of a plate 1 according to the invention. Plate 1 is made of EPS, with the plate having a uniform density all over and a specific weight of 7 - 35 kg/m³. Plate 1 is provided with a plurality of studs 3 at an upper side 2, which are distributed in a regular pattern over said upper side. Said studs 3 are arranged in rows 4, 5, which are staggered with respect to each other, with the distance N1 between the studs 3 in a row 4, 5 being equal to the distance N2 between the two identical rows 4, 5. The distance between two different rows 4, 5 equals ½ N2 and corresponds with the distance ½ N1 over which said rows are staggered with respect to each other. In this manner a regular square grid of studs 3 has been obtained on upper side 2 of the plate. The shape of studs 3 is configured to be such such that a floor heating hose (not shown) can be clamped down between two opposite studs 3. The shape of studs 3 is known per se and will not be discussed in more detail, therefore. At a bottom side 6 remote from upper side 2 said plate is provided with a plurality of ribs 7, which extend parallel to rows 4, 5, and with a plurality of ribs 8, which extend transversely to rows 4, 5. Ribs 7 are spaced apart by a distance which equals ½ N2, whilst ribs 8 are spaced apart by a distance which equals ½ N1. Ribs 7 are located opposite rows 4, 5, whilst ribs 8 are arranged in such a manner that ribs 8 are alternately located opposite studs 3 of rows 4 and opposite studs 3 of rows 5.

Studs 3 and ribs 7, 8 are integrally connected to a baseplate 9 of plate 1. Baseplate 9 and ribs 7, 8 bound chambers 10, which are open towards bottom side 6. As a result of the relative positions of studs 3 and ribs 7, 8, chambers 10 are staggered with respect to studs 3 over a distance ¼ N1 and ¼ N2. As a result of the relative positions of studs 3 and ribs 7, 8, a crossing 11 of two ribs 7, 8 extending transversely to each other is located under each stud 3. When plate 1 is placed on a floor, said ribs 7, 8 are supported on the floor. As a result of this it is possible to walk on plate 1 while fixing the hoses. Then floor heating hoses are clamped between studs 3, after which a top layer is provided over plate 1. A load applied to the floor that is eventually obtained will be transmitted via said top layer to studs 3, and from there, via baseplate 9, to ribs 7, 8. Since studs 3 are positioned above crossing 11, plate 1 is relatively stiff and there will be hardly any deflection of baseplate 9. In one embodiment of plate 1 distance D was 4 cm, distance H was 1.5 cm, distance L was 4 cm and distance B was 1 cm. The studs had a height of approximately 2 cm and a length and width of 4,5 cm each.

The plate 12 that is shown in Figures 2A-2C is different from the plate 1 shown in Figures 1A-1C in that the ends 13 of ribs 7, 8 facing bottom side 6 are rounded. Depending on the floor on which plate 12 is used, this will provide an improved contact noise insulation.

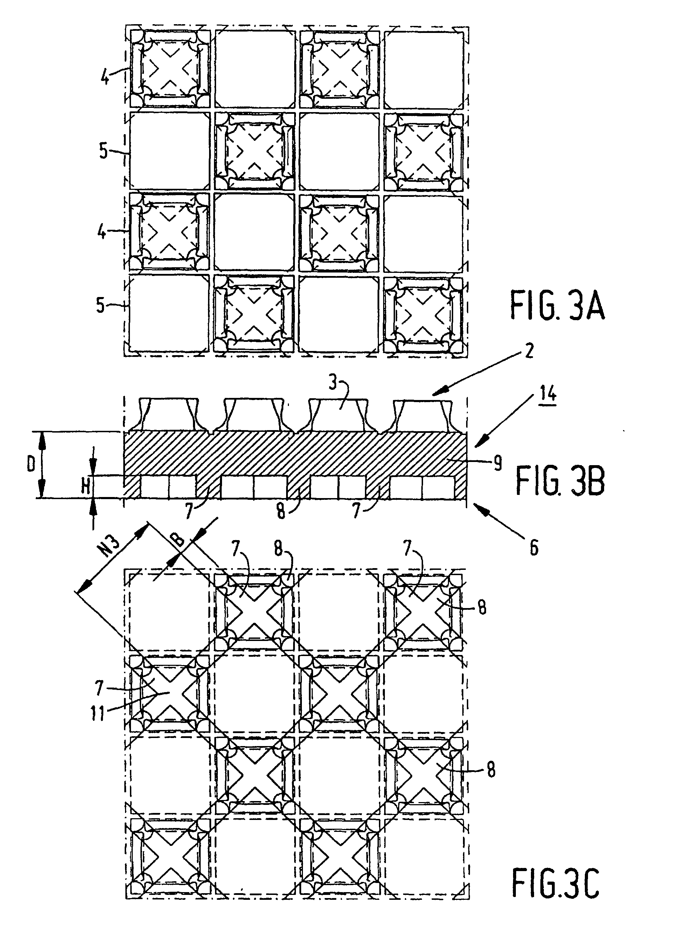

Figures 3A-3C show a third embodiment of a plate 14 according to the invention, wherein studs 3 are located at the upper side 2 in manner similar to plate 1 of Figures 1A-1C. Bottom side 6 is provided with ribs 7, 8 extending transversely to each other, with ribs 7, 8 including an angle of 45° with rows 4, 5. The distance N3 between two parallel ribs 7 or 8 is thereby such that crossings 11 of intersecting ribs 7, 8 are located under studs 3. As a result of the diagonal arrangement of ribs 7, 8 a crossing of two ribs 7, 8 is provided under each stud, while using a minimal number of ribs 7, 8.

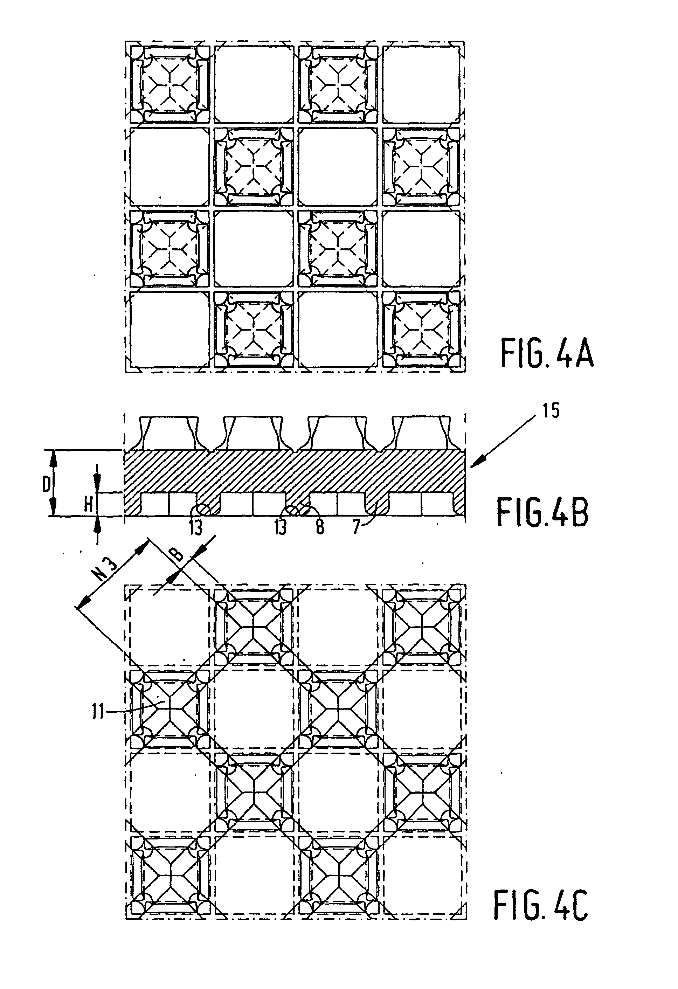

The embodiment of a plate 15 according to the invention that is shown in Figures 4A-4C is different from the plate 14 shown in Figures 3A-3C in that the ends 13 of ribs 7, 8 are rounded.

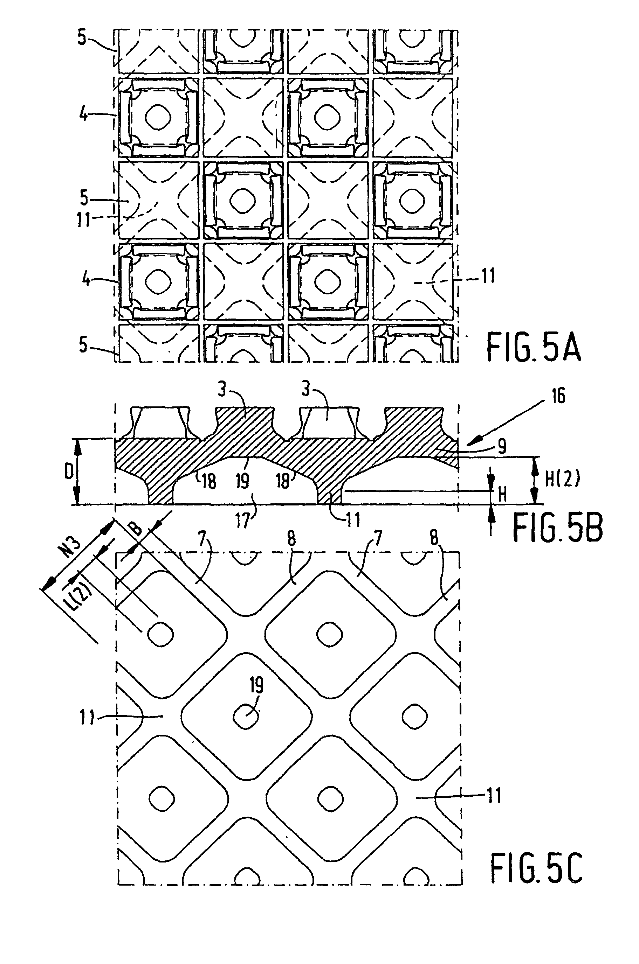

Figures 5A-5C show a fifth embodiment of the plate 16 according to the invention, with ribs 7, 8 including an angle of 45° with rows 4, 5. Ribs 7, 8 are positioned in such a manner with respect to studs 3, that crossings 11 are located between studs 3, and studs 3 are located centrally above the chambers 17 bounded by ribs 7, 8 and baseplate 9. Each chamber 17 is provided, at its side facing baseplate 9, with sloping walls 18 extending in the direction of stud 3, which terminate in a flat wall 19. Loads applied to plate 16 are deflected via stud 3, along walls 18, to ribs 7, 8 by baseplate 9. Because studs 3 are positioned above chamber 17, instead of above crossings 11, plate 16 is more resilient than for example plate 14 shown in Figures 3A-3C. Depending on the floor on which plate 16 is provided and the desired characteristics of the floor to be obtained eventually, an improved sound insulation is thus obtained.

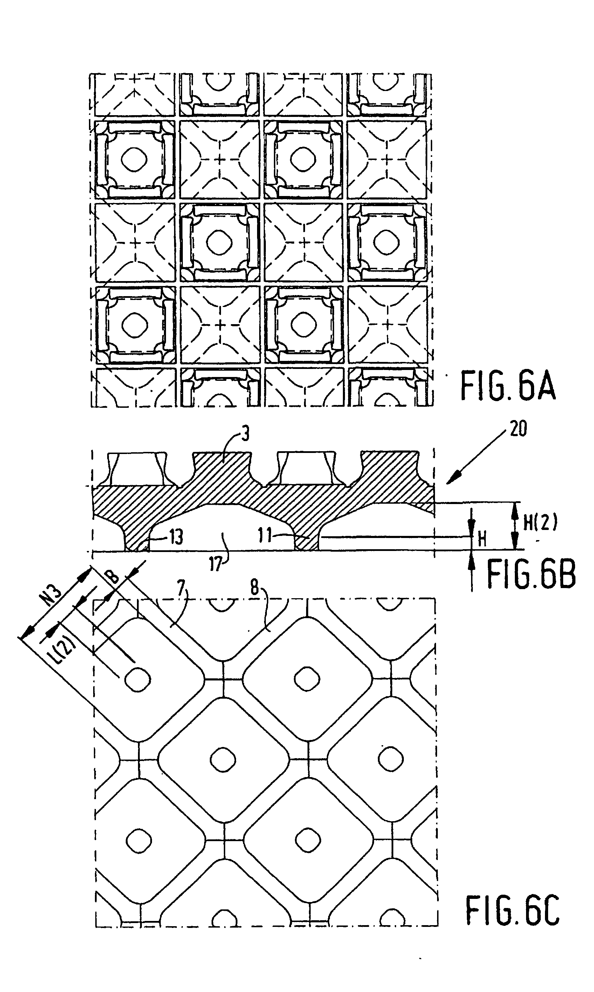

The plate 20 that is shown in Figures 6A-6C is different from plate 16 in that ribs 7, 8 are rounded near their ends 13.

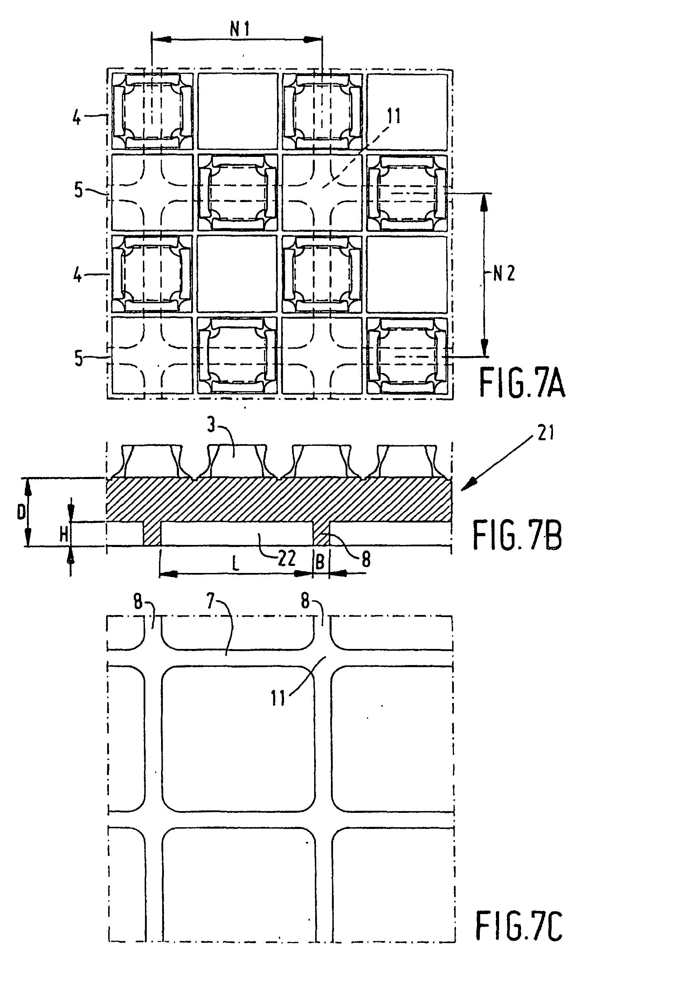

Figures 7A-7C show a seventh embodiment of a plate 21 according to the invention, wherein ribs 7 extend parallel to rows 4, 5 and ribs 8 extend transversely to ribs 7. The distance between two parallel ribs 7 or 8 is equal to the distance N1 between two studs 3 in one and the same row and to the distance N2 between studs 3 from two parallel rows 4, 5. Ribs 7, 8 are positioned in such a manner with respect to studs 3 that crossings 11 are located centrally between four studs 3 arranged adjacently to each other. As a result of this one rib 7 or 8 extends under each stud 3. As a result of this arrangement of ribs 7, 8 studs 3 are supported more sturdily than is the case with plates 16, 20, but less sturdily than is the case with plates 1, 12, 14. As a result of this the resilience of plate 21 will be of a magnitude between that of the above-described plates. Since the distance N1, N2 between ribs 7, 8 is relatively great, chambers 22 are relatively large, which is favourable with a view to obtaining a relatively high thermal insulation and contact noise insulation.

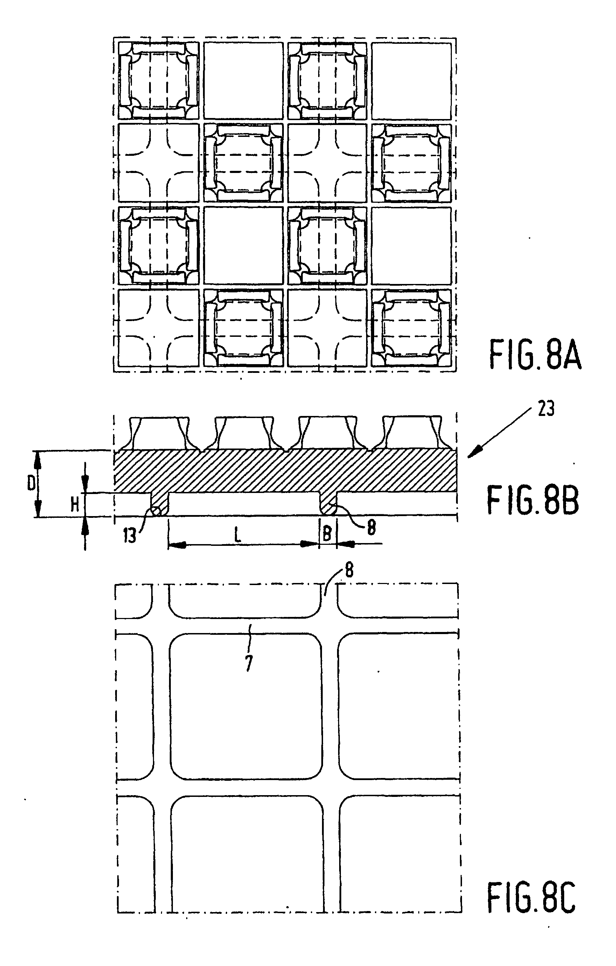

The embodiment of a plate 23 according to the invention that is shown in Figures 8A-8C is different from the plate 21 shown in Figures 7A-7C in that the ends 24 of ribs 7, 8 are rounded.

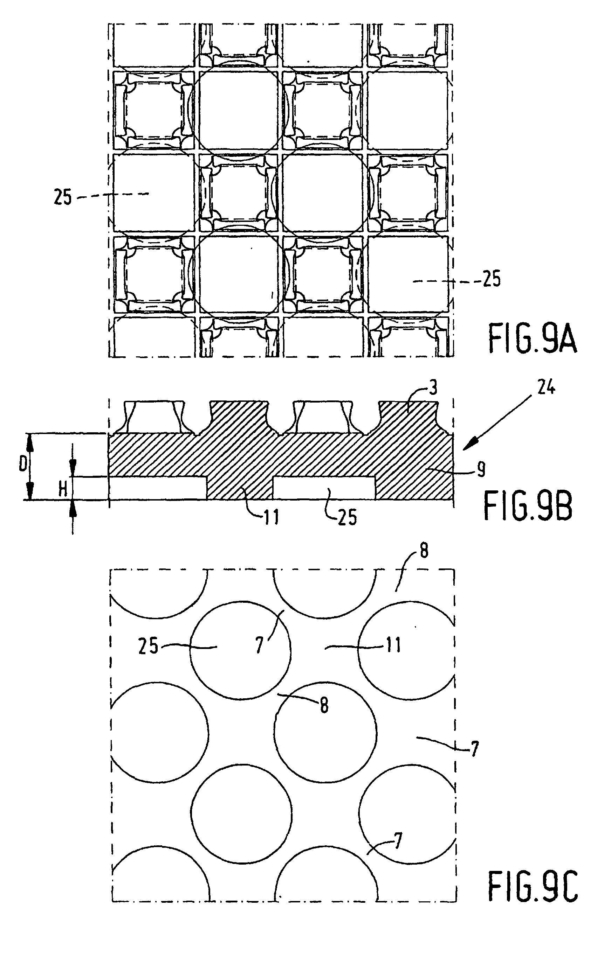

Figures 9A-9C show an embodiment of a plate 24 according to the invention wherein chambers 25 are circular, seen in bottom view. Said circular chambers 25 are bounded by ribs 7, 8. Circular chambers 25 are positioned in such a manner that chambers 25 are located between studs 3, and that a crossing 11 of ribs 7, 8 is provided under each stud 3. As a result of the presence of circular chambers 25, stud 3 is supported over a relatively large surface area by crossing 11, which makes plate 24 relatively stiff. As a result of the presence of the relatively large chambers 25, a relatively good thermal insulation and contact noise insulation is obtained.

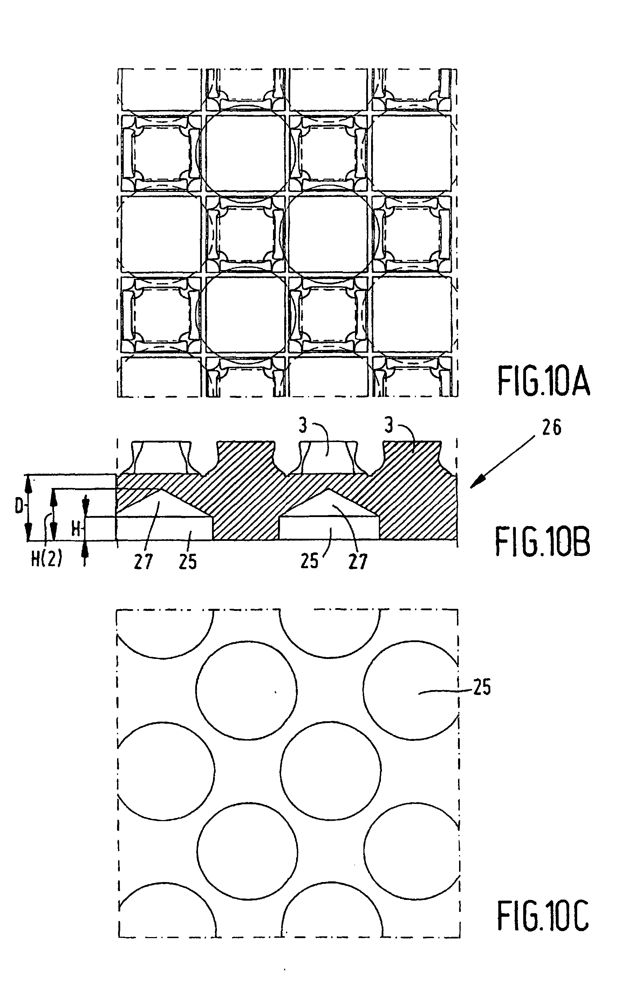

Figures 10A-10C show a plate 26 according to the invention, which is different from plate 24 in that each chamber 25 is provided with a cone 27, which is directed towards upper side 2. This will provide a further improved contact noise insulation.

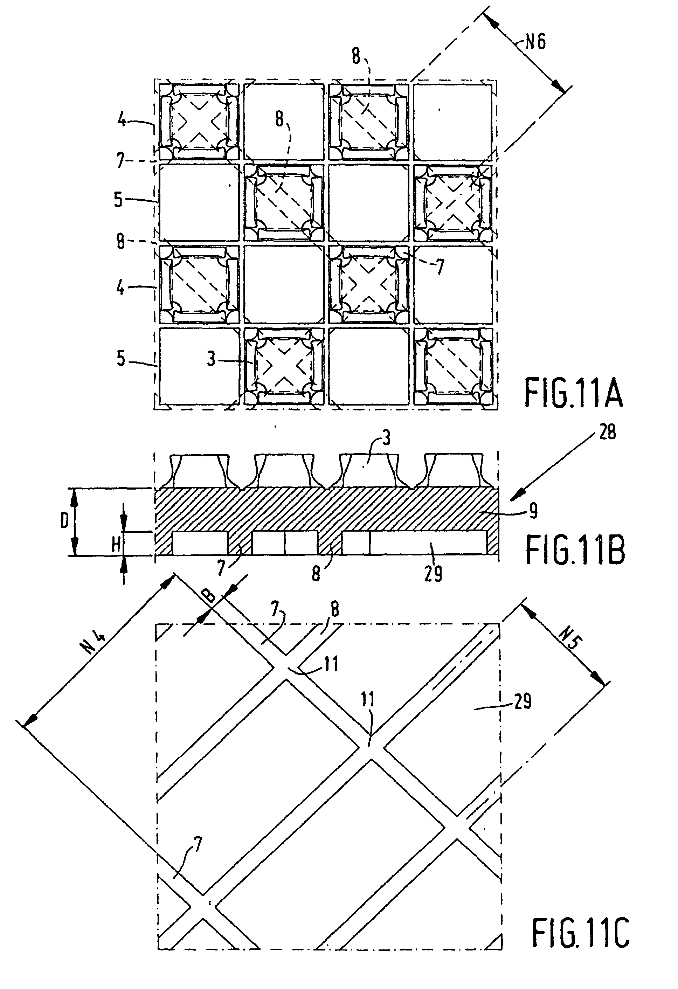

Figures 11A-11C show an eleventh embodiment of a plate 28 according to the invention, wherein ribs 7, 8 are arranged diagonally with respect to rows 4, 5. The distance N4 between two parallel ribs 7 is thereby twice as large as the distance N5 between two parallel ribs 8. Ribs 7, 8 are arranged in such a manner with respect to studs 3, that crossings 11 are located opposite studs 3. Half the number of studs 3 are thereby located opposite a crossing 11, whilst the other half of the number of studs is located opposite a rib 8. As a result of this arrangement the plate is less stiff than plate 14 according to Figures 3A-3C. The chamber 29 bounded by ribs 7, 8 and baseplate 9 is larger than the chamber in plate 14, so that a better insulation will be obtained.

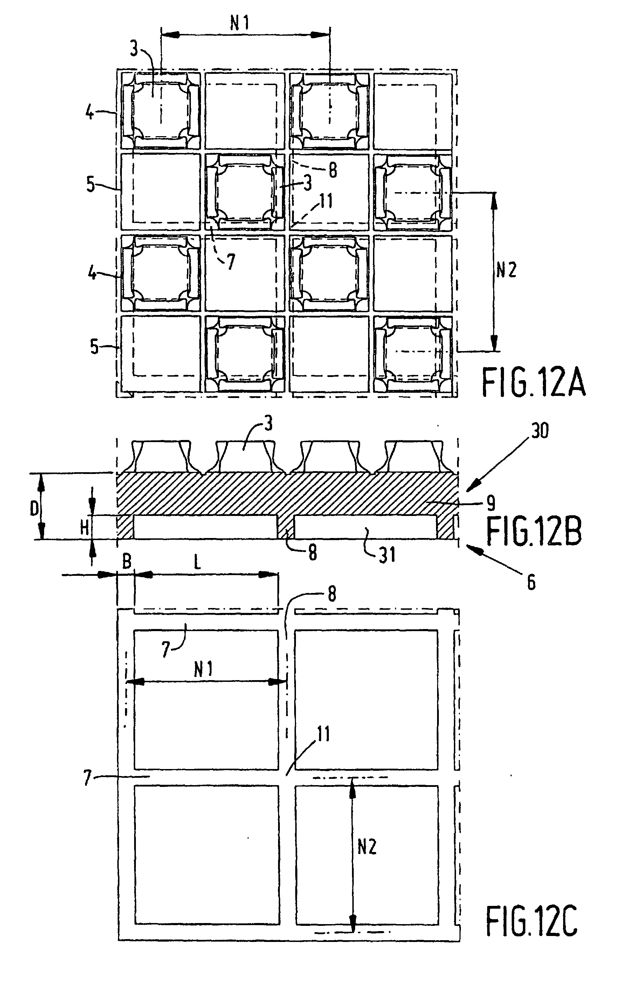

In the embodiment of a plate 30 according to the invention that is shown in Figures 12A-12C, ribs 7 extend parallel to rows 4, 5, whilst ribs 8 extend transversely to ribs 7. The distance between ribs 7, 8 is thereby equal to the distance N1, N2 between studs 3. The position of ribs 7, 8 with respect to studs 3 is such that a crossing 11 of intersecting ribs 7, 8 is located between two studs 3 of different rows 4, 5. Each stud 3 is supported at its bottom side by a rib 7 along one edge, by a rib 8 along another edge and by crossing 11 at a corner point. Chambers 31 are relatively large, as a result of which a relatively good insulation is obtained.

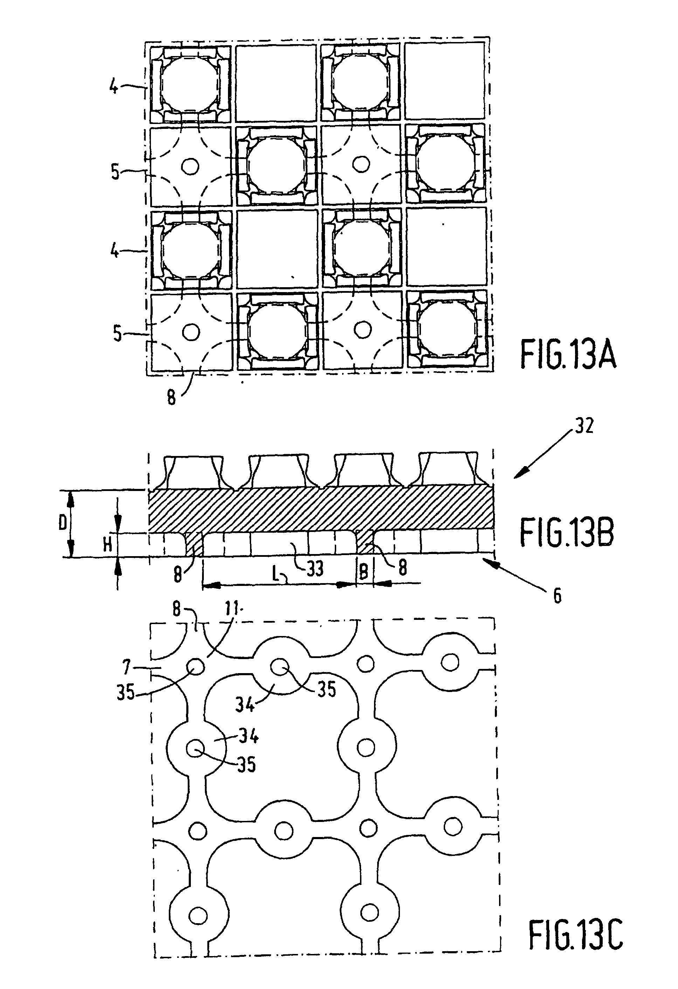

Figures 13A-13C shown an embodiment of plate 32 according to the invention, wherein ribs 7 are located under rows 5, whilst ribs 8, which extend transversely to ribs 7, are located under studs 3 of rows 4. The chambers 33 formed by ribs 7, 8 are rounded near crossings 11, as a result of which crossings 11 are relatively large. Crossings 11 are located between four studs 3 arranged adjacently to each other. Rib 7, 8 is provided with a local reinforcement 34 opposite each stud 3. Both crossing 11 and local reinforcement 34 are provided with recesses 35, which are open towards bottom side 6. As a result of the presence of recesses 35, ribs 7, 8 and crossings 11 and reinforcement 34 exhibit the same wall thickness practically all over, which is advantageous with regard to manufacturing plate 32, and which results in an advantageous behaviour when loads are applied to the plate. Ribs 7, 8 will deform when the plate is loaded, whereby said ribs will become convex. As a result of the presence of recesses 35 a similar deformation may occur near crossings 11 and reinforcements 34.

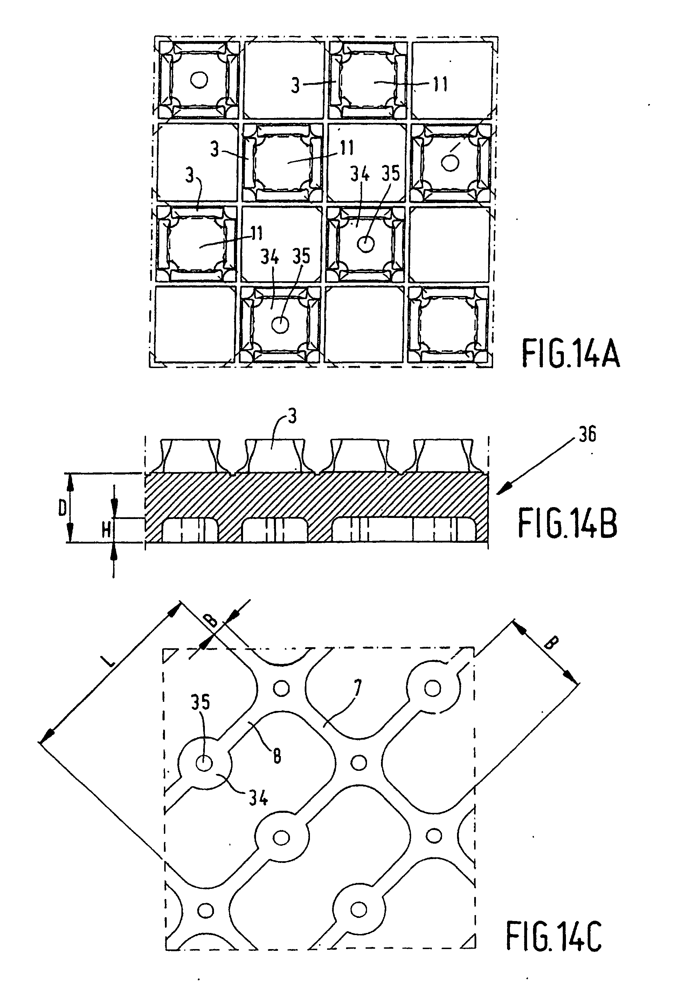

Figures 14A-14C show an embodiment of a plate 36 according to the invention, which forms a combination of plate 28 according to Figures 11A-11C and plate 32 according to Figures 13A-13C. Crossings 11 and local reinforcements 34 are thereby arranged in such a manner that a crossing 11 or a support 34 is located opposite each stud 3, and vice versa.

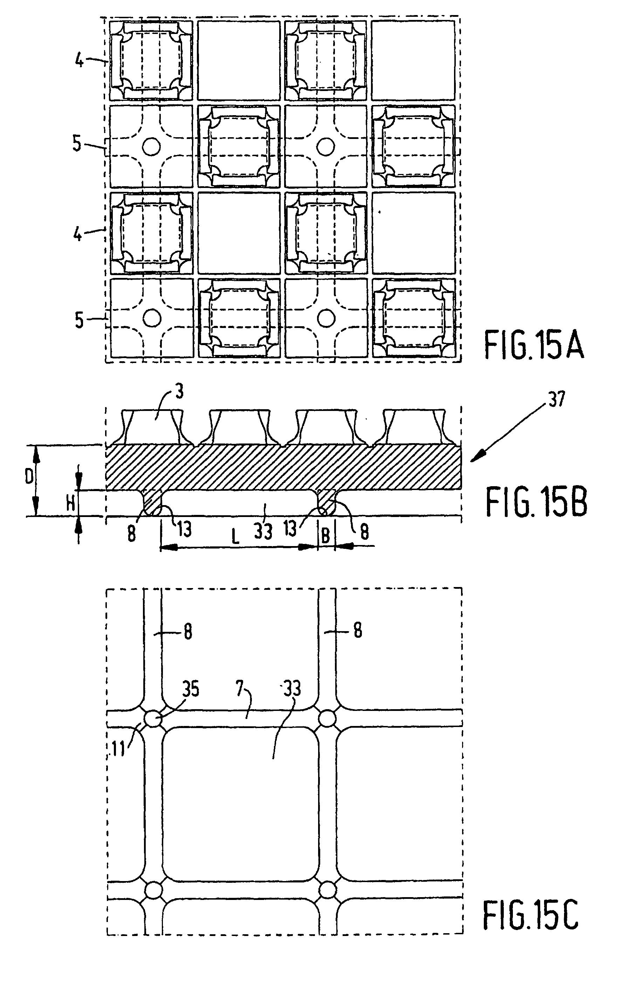

Figures 15A-15C show an embodiment of a plate 37 according to the invention, which is different from the plate 32 shown in Figures 13A-13C in that ribs 7, 8 are not provided with local reinforcements and in that the ends 13 of ribs 7, 8 are rounded.

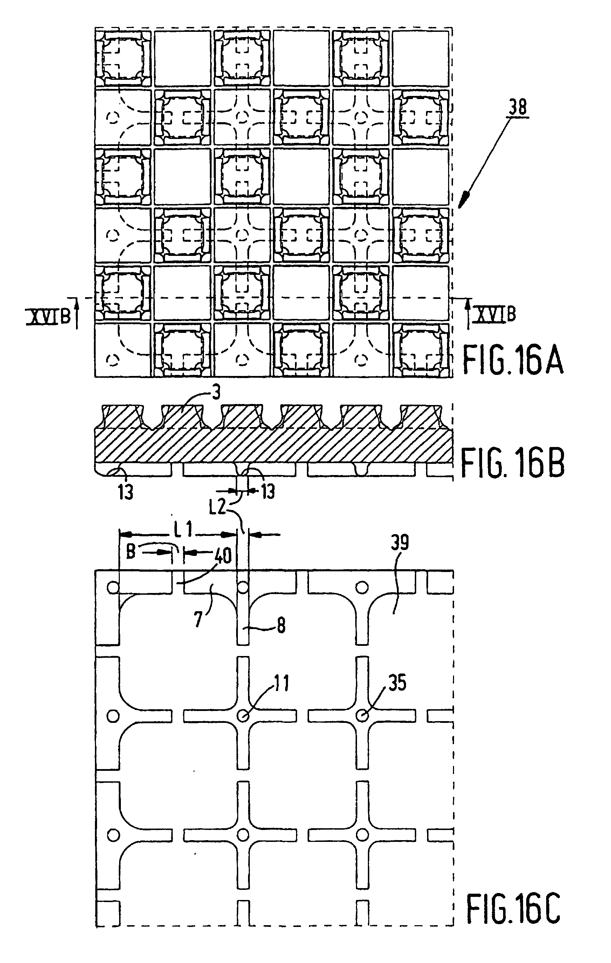

Figures 16A-16C show an embodiment of a plate 38 according to the invention, which is different from the plate 21 shown in Figures 7A-7C in that ribs 7, 8 are provided with passages 40 interconnecting chambers 39 arranged adjacently to each other. Each passage has a width B which is less than 30% and preferably less than 20% of the length of a rib 7, 8. The length of a rib 7, 8 of plate 38 is equal to the distance L1 between two opposite ribs plus the thickness L2 of a rib. It has become apparent that the use of such a passage having a relatively small width in comparison with the length of a rib results in an even better thermal and acoustic insulation than is the case with the thermal and acoustic insulation of plate 21 according to Figures 7A-7C.

Ribs 7, 8 of the plates may be elastified. This means that the polystyrene ribs are temporarily subjected to a pressure load such that afterwards ribs 7, 8 will exhibit greater resilience than before.

It will be apparent that various other embodiments of the plate according to the invention are conceivable, wherein the upper side of all embodiments will be provided with a grid of studs, however, and wherein the bottom side will be provided with chambers bounded by ribs. Depending on the desired characteristics of the plate, crossings of intersecting ribs will be positioned opposite or between said studs.

The above-described plates have been tested in accordance with DIN 4109, in order to determine a so-called contact noise insulation value when the plates are placed on a hard base. Values ranging from 26 to 30 dB were measured thereby.

## Claims

1. A plate (1) suitable for fixing a floor heating hose, which plate is at an upper side (2) provided with a plurality of studs (3) to clampingly receive a floor heating hose between adjacent studs, **characterised in that**, said plate comprises at its underside upstanding ribs (7, 8) facing away from the plate and forming a regular pattern of adjacent chambers.

2. A plate according to claim 1, **characterized in that** a rib (7, 8) bounding said chambers (10) is provided with a passage interconnecting the chambers (10) arranged adjacently to each other, whereby the width of the passage is less than 30%, preferably less than 20%, of the length of a rib.

3. A plate according to claim 1 or 2, **characterized in that** said studs (3) are distributed in a regular grid over said upper side.

4. A plate according to any one of the preceding claims, **characterized in that** said studs (3) are arranged in a square grid, whilst said chambers are likewise arranged in a similarly shaped square pattern.

5. A plate according to claim 4, **characterized in that** said square pattern is turned through 45° with respect to said square grid.

6. A plate according to claim 4 or 5, **characterized in that** said square pattern is twice as large as said square grid.

7. A plate according to claim 1, 2 or 3, **characterized in that** said studs (3) are arranged in a square grid, whilst the chambers (10) are arranged in a rectangular pattern which is turned through 45° with respect to said square grid.

8. A plate according to any one of the preceding claims, **characterized in that** a stud (3) is located centrally opposite a chamber (10).

9. A plate according to any one of the preceding claims, **characterized in that** a stud (3) is located opposite a crossing of intersecting ribs.

10. A plate according to any one of the preceding claims, **characterized in that** a stud (3) is located opposite a rib, centrally between two crossings of intersection ribs (7, 8).

11. A plate according to any one of the preceding claims, **characterized in that** a stud (3) is located opposite a rib, whereby said rib (7, 8) is provided with a local reinforcement.

12. A plate according to any one of the preceding claims, **characterized in that** a crossing or reinforcement is provided with a recess which is open towards said bottom side.

13. A plate according to any one of the preceding claims, **characterized in that** said plate is made of one homogeneous material.

14. A plate according to any one of the preceding claims, **characterized in that** said plate is made of polystyrene having a specific weight of 7 - 35 kg/m³.

15. A plate according to any one of the preceding claims, **characterized in that** the ends of said ribs (7, 8) are rounded.

16. A plate according to any one of the preceding claims, **characterized in that** each chamber (10) is square, rectangular or circular.

17. A plate according to any one of the preceding claims, **characterized in that** said chamber (10) is dome-shaped, seen in cross-sectional view.

18. A plate according to any one of the preceding claims, **characterized in that** said chambers (10) are filled with an insulating material.

19. A plate according to claim 18, **characterized in that** said insulating material is mineral wool or sand.

20. A plate according to any one of the preceding claims, **characterized in that** each rib (7, 8) has been elastified.

## Patentansprüche

1. Platte (1), geeignet für die Befestigung eines Fußbodenheizungsschlauchs, die an ihrer Oberseite (2) mit einer Vielzahl von Stollen (3) versehen ist, wobei ein Fußbodenheizungsschlauch jeweils zwischen benachbarten Stollen eingeklemmt werden kann, **dadurch gekennzeichnet, daß** die genannte Platte an ihrer Unterseite mit herausragenden Rippen (7, 8) versehen ist, die von der Platte weg weisen und ein regelmäßiges Muster von benachbarten Kammern bilden.

2. Platte nach Anspruch 1, **dadurch gekennzeichnet, daß** eine Rippe (7, 8), welche die genannten Kammern (10) begrenzt, mit einem Durchlaß versehen ist, welcher die nebeneinander angeordneten Kammern (10) miteinander verbindet, wobei die Breite des Durchlasses weniger als 30 %, vorzugsweise weniger als 20 % der Länge einer Rippe ausmacht.

3. Platte nach Anspruch 1 oder 2, **dadurch gekennzeichnet, daß** die genannten Stollen (3) in einem regelmäßigen Gitter auf der genannten Oberseite angeordnet sind.

4. Platte nach einem der vorstehenden Ansprüche, **dadurch gekennzeichnet, daß** die genannten Stollen (3) in einem quadratischen Gitter angeordnet sind und die genannten Kammern ebenfalls in einem ähnlich quadratisch geformten Muster angeordnet sind.

5. Platte nach Anspruch 4, **dadurch gekennzeichnet, daß** das genannte quadratische Muster um 45° gegenüber dem genannten quadratischen Gitter gedreht ist.

6. Platte nach Anspruch 4 oder 5, **dadurch gekennzeichnet, daß** das genannte quadratische Muster doppelt so groß ist wie das genannte quadratische Gitter.

7. Platte nach Ansprüchen 1, 2 oder 3, **dadurch gekennzeichnet, daß** die genannten Stollen (3) in einem quadratischen Gitter angeordnet sind, während die Kammern (10) in einem rechteckigen Muster angeordnet sind, welches im Verhältnis zu dem genannten quadratischen Gitter um 45° gedreht ist.

8. Platte nach einem der vorstehenden Ansprüche, **dadurch gekennzeichnet, daß** ein Stollen (3) mittig gegenüber einer Kammer (10) angeordnet ist.

9. Platte nach einem der vorstehenden Ansprüche, **dadurch gekennzeichnet, daß** ein Stollen (3) gegenüber einer Kreuzung von sich schneidenden Rippen angeordnet ist.

10. Platte nach einem der vorstehenden Ansprüche, **dadurch gekennzeichnet, daß** ein Stollen (3) gegenüber einer Rippe mittig zwischen zwei Kreuzungen von sich schneidenden Rippen (7, 8) angeordnet ist.

11. Platte nach einem der vorstehenden Ansprüche, **dadurch gekennzeichnet, daß** ein Stollen (3) gegenüber einer Rippe angeordnet ist, wodurch die genannte Rippe (7, 8) lokal verstärkt wird.

12. Platte nach einem der vorstehenden Ansprüche, **dadurch gekennzeichnet, daß** eine Kreuzung oder Verstärkung mit einem Vertiefung versehen ist, welche sich zur genannten Unterseite hin öffnet.

13. Platte nach einem der vorstehenden Ansprüche, **dadurch gekennzeichnet, daß** die genannte Platte aus einem homogenen Material hergestellt wird.

14. Platte nach einem der vorstehenden Ansprüche, **dadurch gekennzeichnet, daß** die genannte Platte aus Polystyrol mit einem spezifischen Gewicht von 7-35 kg/m³ hergestellt ist.

15. Platte nach einem der vorstehenden Ansprüche, **dadurch gekennzeichnet, daß** die Enden der genannten Rippen (7, 8) gerundet sind.

16. Platte nach einem der vorstehenden Ansprüche, **dadurch gekennzeichnet, daß** jede Kammer (10) quadratisch, rechteckig oder kreisförmig ist.

17. Platte nach einem der vorstehenden Ansprüche, **dadurch gekennzeichnet, daß** die genannte Kammer (10) im Querschnitt kuppelförmig ist.

18. Platte nach einem der vorstehenden Ansprüche, **dadurch gekennzeichnet, daß** die genannten Kammern (10) mit einem Isoliermaterial gefüllt sind.

19. Platte nach Anspruch 18, **dadurch gekennzeichnet, daß** das genannte Isoliermaterial Steinwolle oder Sand ist.

20. Platte nach einem der vorstehenden Ansprüche, **dadurch gekennzeichnet, daß** jede Rippe (7, 8) elastifiziert wurde.

## Revendications

1. Plaque (1) adaptée pour fixer un tuyau de chauffage par le sol, laquelle plaque est munie, au niveau d'un côté supérieur (2), d'une pluralité de goujons (3) pour recevoir par pincement un tuyau de chauffage par le sol entre des goujons adjacents, **caractérisée en ce que** ladite plaque comprend, au niveau de son côté inférieur, des nervures droites (7, 8) opposées et formant un motif régulier de chambres adjacentes.

2. Plaque selon la revendication 1, **caractérisée en ce qu'**une nervure (7, 8) délimitant lesdites chambres (10) est pourvue d'un passage reliant entre elles les chambres (10) agencées de manière adjacente les unes par rapport aux autres, moyennant quoi la largeur du passage est inférieure à 30 %, de préférence inférieure à 20 % de la longueur d'une nervure.

3. Plaque selon la revendication 1 ou 2, **caractérisée en ce que** lesdits goujons (3) sont répartis dans une grille régulière sur ledit côté supérieur.

4. Plaque selon l'une quelconque des revendications précédentes, **caractérisée en ce que** lesdits goujons (3) sont agencés dans une grille carrée, tandis que lesdites chambres sont agencées de la même manière selon un motif carré de forme similaire.

5. Plaque selon la revendication 4, **caractérisée en ce que** ledit motif carré est tourné de 45° par rapport à ladite grille carrée.

6. Plaque selon la revendication 4 ou 5, **caractérisée en ce que** ledit motif carré est deux fois plus grand que ladite grille carrée.

7. Plaque selon la revendication 1, 2 ou 3, **caractérisée en ce que** lesdits goujons (3) sont agencés dans une grille carrée, tandis que les chambres (10) sont agencées selon un motif rectangulaire qui est tourné de 45° par rapport à ladite grille carrée.

8. Plaque selon l'une quelconque des revendications précédentes, **caractérisée en ce qu'**un goujon (3) est situé de manière centrale à l'opposé d'une chambre (10).

9. Plaque selon l'une quelconque des revendications précédentes, **caractérisée en ce qu'**un goujon (3) est situé à l'opposé d'une intersection de nervures qui se croisent.

10. Plaque selon l'une quelconque des revendications précédentes, **caractérisée en ce qu'**un goujon (3) est situé à l'opposé d'une nervure, au centre entre deux intersections de nervures qui se croisent (7, 8).

11. Plaque selon l'une quelconque des revendications précédentes, **caractérisée en ce qu'**un goujon (3) est situé à l'opposé d'une nervure, moyennant quoi ladite nervure (7, 8) est pourvue d'un renfort local.

12. Plaque selon l'une quelconque des revendications précédentes, **caractérisée en ce qu'**une intersection ou un renfort est pourvu d'un évidement qui est ouvert en direction dudit côté inférieur.

13. Plaque selon l'une quelconque des revendications précédentes, **caractérisée en ce que** ladite plaque est fabriquée à partir d'un matériau homogène.

14. Plaque selon l'une quelconque des revendications précédentes, **caractérisée en ce que** ladite plaque est fabriquée en polystyrène ayant un poids spécifique compris entre 7 et 35 kg/m³.

15. Plaque selon l'une quelconque des revendications précédentes, **caractérisée en ce que** les extrémités desdites nervures (7, 8) sont arrondies.

16. Plaque selon l'une quelconque des revendications précédentes, **caractérisée en ce que** chaque chambre (10) est carrée, rectangulaire ou circulaire.

17. Plaque selon l'une quelconque des revendications précédentes, **caractérisée en ce que** ladite chambre (10) est en forme de dôme lorsqu'elle est vue en coupe transversale.

18. Plaque selon l'une quelconque des revendications précédentes, **caractérisée en ce que** lesdites chambres (10) sont remplies d'un matériau isolant.

19. Plaque selon la revendication 18, **caractérisée en ce que** ledit matériau isolant est de la laine minérale ou du sable.

20. Plaque selon l'une quelconque des revendications précédentes, **caractérisée en ce que** chaque nervure (7, 8) a été élastifiée.
